# EUROPEAN PATENT APPLICATION

(11) **EP 0 723 795 A2**
(43) Date of publication of application: **31.07.1996**
(21) Application number: 96300414.8
(22) Date of filing: 22.01.1996
(51) Int. Cl.: B01D 19/04

(54) **Particulate foam control agents and their use**

(30) Priority: 26.01.1995 GB 9501509
(71) Applicant: DOW CORNING S.A., B-7180 Seneffe (BE)
(72) Inventor: Germain, Pierre André Georges Gustave, B-6001 Marcinelle (BE); Sawicki, George Christopher, Penarth, South Glamorgan (GB); Lenoble, Bertrand Louis Julien, B-7830 Hellebecq (BE)
(74) Representative: Vandamme, Luc Johan Roger

(57) **Abstract**

A particulate foam control agent which comprises from 1 to 30 parts by weight of an organic antifoam, from 45 to 99 parts by weight of a zeolite carrier for the antifoam and from 1 to 30 parts by weight of a film-forming binder, there being no silicone-based antifoam present in the particulate foam control agent. Also claimed are detergent compositions containing the foam control agent.

## Description

This invention relates to non-silicone based foam control agents which are particulate, and especially those which are intended for incorporation in detergent compositions which are in powder form.

Foam control agents based on non-silicone antifoams, and foam control agents which are in particulate form, are known in the art. Many patent specification describe such foam control agents. Non-silicone based foam control agents for powder detergent compositions are also known. Carrier materials are often used in combination with foam control agents to make these foam control agents into a more substantial and more easily handled solid particulate material, which can be easily post-blended with a powder detergent composition.

Materials suggested as carrier materials for particulate foam control agents include water soluble, water insoluble and water dispersible materials. Examples of suggested carrier materials are sulphates, carbonates, phosphates, polyphosphates, silicas, silicates, clays, starches, cellulosic materials and alumino silicates. The use of carrier materials adds a component to the final composition of the detergent powder. If the carrier material is not itself a component which contributes to the efficiency or activity of the powder detergent, it will in effect constitute an additional soil which has to be removed during the laundering process. As a result it is desirable to use materials which are known components of detergent powders.

A particularly preferred carrier material for particulate foam control agents is sodium tripolyphosphate. However, in view of the desire to reduce and even eliminate phosphates in detergent compositions for environmental reasons, there has been a need to find more suitable carrier materials. Many materials do not have the correct caking ability, density, particle strength or size. This explains why many proposals have used non-active materials in powder detergents, e.g. starch. One particularly useful active material for the detergent composition is zeolite.

Zeolites have been mentioned as an optional carrier material for foam control agents in a number of patent specifications. For example in EP application 206,522 there is disclosed a particulate antifoam ingredient suitable for incorporation into a detergent powder composition, said ingredient comprising particles which are capable of swelling, dissolving or disintegrating on contact with water, said particles comprising a core carrying a high and a low temperature-sensitive antifoam active substance and having a coating, surrounding the core, of material which is impervious while in the dry state, yet which is capable of disruption on contact with water thereby to release the antifoam active substances. As one option for use as core is described a zeolite cation exchanger which is capable of disintegrating on addition to water. Although the specification names an example of such zeolite, it is well know to the person skilled in the art that zeolites do not disintegrate upon addition to water. This teaching, therefore, leads away from the use of zeolites. It is also not surprising that the specification provides no examples in which a zeolite is used as the core material.

Zeolites have also been suggested as core materials for use in conjunction with silicone-based antifoams. For example in EP specification 484081 there is disclosed a particulate antifoam ingredient comprising a silicone oil antifoam active absorbed by particles of solid carrier, characterised in that the particles are coated with a certain amount of an organic polymer which is soluble in aqueous alkaline solution. Although zeolites are listed among the materials suitable to be a solid carrier, neither in this nor in other patent specifications suggesting their use have zeolites actually been used as the carrier material for foam control agents. As mentioned above the examples of EP 206522 do not disclose the use of zeolite either and the exemplified antifoam used always included a silicone antifoam.

The Applicant had discovered that there is a problem connected to the use of zeolites as carrier materials for antifoams. It is not therefore surprising that no examples with zeolite carriers have been used. The problem lies in the fact that there is very little, if any, actual control of the foam level in the washing machine in the early part of the washing cycle unless excessively large amounts of silicone antifoam is used, which is uneconomical and causes additional soil to be removed during the laundering process. In our co-pending applications EP 94305311.6 and GB 9426236.7 we have disclosed that if the silicone antifoam is absorbed on a zeolite carrier in combination with a organopolysiloxane polyoxyalkylene copolymer or an organic surfactant, improved release of the silicone antifoam is obtained in the early part of the washing cycle. It is important that the organopolysiloxane polyoxyalkylene copolymer or the organic surfactant is deposited onto the zeolite carrier not later than the deposition of the silicone antifoam.

We have now surprisingly found that if no silicone-based antifoam is used, zeolites can be used as carrier materials without needing to introduce additional ingredients to form a stable foam control agent with good release characteristics in the early part of a washing cycle.

Accordingly the invention provides in a first aspect a particulate foam control agent which comprises from 1 to 30 parts by weight of an organic antifoam, from 45 to 99 parts by weight of a zeolite carrier for the antifoam and from 1 to 30 parts by weight of a film-forming binder, there being no silicone-based antifoam present in the particulate foam control agent.

Organic antifoams as used herein are known materials and many have been described in patent specifications, including those referred to herein. They may be liquid or waxy materials which are based on e.g. hydrocarbon materials or fatty esters or dispersions thereof with hydrophobic filler materials. Particular examples are less polar oils, e.g. mineral oils and more polar oils, e.g. vegetable oils. Preferred are liquid oils, most preferably with a viscosity at 25°C of no more than 20,000 mm²/s, although solid materials, e.g. paraffinic waxes which melt at or above 50°C and micro crystalline waxes are also suitable. Hydrocarbon materials which are normally liquid at room temperature (20°C) are useful, and include those having a melting point of from -40°C to 5°C and usually contain 12 to 40 carbon atoms per molecule. These tend to be mineral oils with a boiling point at normal atmospheric pressure of at least 110°C. Liquid oils include isoparaffinic oils, vegetable oils, polyoxypropylene glycols, polyoxybutylene glycols, esters of carboxylic acids and higher alcohols, higher carboxylic acid and higher alcohols. Preferred are hydrocarbon oils of the naphthenic or paraffinic type. White mineral oil, sold e.g. as Kaydol® are particularly preferred. Suitable fatty esters include esters of mono- or polyhydric alcohols having from 1 to 40 carbon atoms and mono- or polycarboxylic acids having from 1 to 40 carbon atoms, with a chain length of at least 16 carbon atoms. Natural esters, e.g. carnauba was, spermaceti and synthetic esters, e.g. ethylene glycol, glycerol and sorbitan esters. Suitable polar oils, e.g. vegetable based oils, olive oil, castor oil, soybean oil, sunflower oil, avocado oil, corn oil, cotton seed oil, linseed oil, sesame seed oil, peanut oil, jojoba oil, coconut oil, wheat germ oil, palmitic acid or triglycerides, e.g. caprilic/capric triglyceride. It is preferred that the organic antifoams also comprise filler materials in amounts up to 25% by weight of the total weight of the antifoam.

Preferred is the use of liquid organic oils, preferably in conjunction with hydrophobic fillers, as the only antifoam present in the foam control agents according to the present invention.

Filler particles which are useful in the organic antifoams for the present invention are also well known and have been described in many publications. They are finely divided particulate materials including silica, fumed TiO₂, Al₂O₃, zinc oxide, magnesium oxide, salts of aliphatic carboxylic acids, reaction products of isocyanates with certain materials, e.g. cyclohexylamine, alkyl amides, for example ethylene or methylene bis stearamide. Most preferred are silica particles with a surface area as measured by BET measurement of at least 50 m²/g. Suitable silica particles may be made according to any of the standard manufacturing techniques for example thermal decomposition of a silicon halide, decomposition and precipitation of a metal salt of silicic acid, e.g. sodium silicate and a gel formation method. Suitable silicas for use in the antifoams include therefore fumed silica, precipitated silica and gel formation silica. The average particle size of these fillers may range from 0.1 to 20µm, but preferably is from 0.5 to 2.5µm.

Where the filler particles are not hydrophobic by themselves their surface is rendered hydrophobic in order to make the antifoam sufficiently effective in aqueous systems. Rendering the filler particles hydrophobic may be done prior to or after dispersing the filler particles in the organic liquid part of the antifoam according to any of the known methods. Fillers which have been pre-treated to render them hydrophobic are commercially available from many companies, e.g. Sipernat® D10 from Degussa. The filler particles are added to the liquid part of the organic antifoam in an amount of from 1 to 25% by weight of the antifoam, preferably from 1 to 20%, most preferably from 2 to 8%.

The zeolite which may be used in the foam control agents according to the invention may be any of those alumino silicate materials which are known to be beneficial in detergent powder compositions and have been described in a number of patent specifications. Zeolites are used as cation exchange components. Suitable zeolite materials include particularly those which are known as Zeolite A and have an average formula (Na₂O)ₘ.Al₂O₃.(SiO₂)ₙ.(H₂O)ₜ, wherein m has a value of from 0.9 to 1.3, n a value of from 1.3 to 4.0 and t a value of from 1 to 6. Such zeolites are known ingredients in detergent powder compositions.
Suitable zeolites may be crystalline or amorphous alumino silicates and have been described in particular in EP 192 442 and EP 329 842 and in the patent specifications which are referred to on page 2 of the latter specification. In addition to the zeolite carrier material, other carrier materials may also be used, which may be organic or inorganic, preferably components of detergent compositions.

The foam control agent also comprises a film-forming binder material, sometimes referred to as an encapsulant material. This material is present to improve the storage stability of the foam control agent in a powder detergent composition. The binder or encapsulant material may be any of the known or proposed binder of encapsulant materials described in the art of protecting foam control agents in powder detergent compositions against deterioration upon storage. Suitable materials have been described in a number of patent specifications, both those relating to silicone-based antifoams and to organic antifoams. GB. 1 407 997 discloses the use of an organic material which is water soluble or water dispersible, substantially non-surface active and detergent impermeable. Examples given in that specification include gelatine, agar and reaction products of tallow alcohol and ethylene oxide. In GB. 1 523 957 the use of a water insoluble wax having a melting point in the range from 55 to 100°C and a water insoluble emulsifying agent is disclosed. In E.P. 142 910, there is disclosed the use of a water soluble or water dispersible organic carrier comprising from 1 to 100% of a first organic carrier component having a melting point of from 38 to 90°C and from 0 to 99% of a second organic carrier which has a melting point from 5 to 36°C. Examples of the organic carrier materials include tallow alcohol ethoxylates, fatty acid esters and amides and polyvinyl pyrrolidone. In E.P. 206 522 there is described the use of a material which is impervious to oily antifoam active substance when in the dry state, yet capable of disruption on contact with water. Examples given include materials with a waxy nature which may form an interrupted coating that will allow water to pass through under was conditions. Other materials which are listed include water soluble sugars. In E.P. 210 721 there is disclosed the use of an organic material which is a fatty acid or a fatty alcohol having a carbon chain of from 12 to 20 carbon atoms and a melting point of from 45 to 80°C, for example stearic acid or stearyl alcohol.

A particularly preferred binder is a polycarboxylate-type binder or encapsulant or a cellulosic material. So-called polycarboxylate materials have been described in the art, and have the advantage that, as zeolites, they are useful ingredients in detergent compositions. Some of them have been suggested as polymeric coatings for antifoam ingredients in E.P. 484 081, in conjunction with a silicone oil antifoam and a solid carrier. Polycarboxylate materials are known as dispersing agents in detergent powders and are water soluble polymers, copolymers or salts thereof. They have at least 60% by weight of segments with the general formula 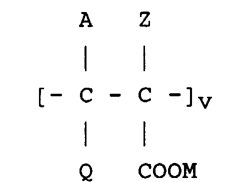 wherein A, Q and Z are each selected from the group consisting of hydrogen, methyl, carboxyl, carboxymethyl, hydroxyl and hydroxymethyl, M is hydrogen, alkali metal, ammonium or substituted ammonium and v is from 30 to 400. Preferably A is hydrogen or hydroxyl, Q is hydrogen or carboxyl and Z is hydrogen. Suitable polymeric polycarboxylates include polymerised products of unsaturated monomeric acids, e.g. acrylic acid, maleic acid, maleic anhydride, fumaric acid, itaconic acid, aconitic acid, mesaconic acid, citraconic acid and methylenemalonic acid. The co-polymerisation with lesser amounts of monomeric materials comprising no carboxylic acid, e.g. vinylmethyl, vinylmethyl ethers, styrene and ethylene is not detrimental to the use of the polycarboxylates in the foam control agents of the present invention. Depending on the type of polycarboxylate this level can be kept low, or levels can be up to about 40% by weight of the total polymer or copolymer.

Particularly suitable polymeric polycarboxylates are polyacrylates with an average viscosity at 25°C in mPa.s from 50 to 10,000, preferably 2,000 to 8,000. The most preferred polycarboxylate polymers are acrylate/maleate or acrylate/fumarate copolymers or their sodium salts. Molar mass of suitable polycarboxylates may be in the range from 1,000 to 500,000, preferably 3,000 to 100,000, most preferably 15,000 to 80,000. The ratio of acrylate to maleate or fumarate segments of from 30:1 to 2:1. Polvcarboxylates may be supplied in powder form or liquid forms. They may be liquid at room temperature or may be supplied as aqueous solutions. The latter are preferred as they facilitate the manufacture of the foam control agents according to the invention with conventional spray applications. Many of the polycarboxylates are hygroscopic but are claimed not to absorb water from air when formulated in detergent powders.

Suitable cellulosic materials include hydroxypropyl cellulose and hydroxyethyl cellulose. These materials are well known and are commercially available, e.g. as Klucel®.

Alternative film-forming binders may be surface active materials which act as film-forming materials. They are exemplified by higher alkyl ethoxylates, alkyl polyglucosides or derivatives thereof.

The alkyl polyglucoside materials and derivatives are particularly useful in view of their environmental advantages.

The foam control agents according to the invention can be prepared by any known method. The antifoam and binder ingredients may be made into a premix, which may be done by any of method, before depositing onto the zeolite or they may be deposited separately onto the binder in any order. If a premix is made, it can be done by simply mixing the ingredients, preferably with reasonable shear or high shear. Where one of the ingredients is a solid or waxy material, or a material of high viscosity, it may be beneficial to heat the ingredient or the premix to melt it and thus reduce the working viscosity of the premix. Alternatively the premix of the components may be diluted with a solvent, e.g. a low viscosity siloxane polymer, cyclic siloxane polymer, organic solvent or even by making a dispersion in water.

Depositing the ingredients or premix onto zeolites can be done in a number of ways. Conventional procedures of making powders are particularly useful for making the particulate foam control agent. These include depositing of a previously prepared mixture of all both components onto the zeolite which is the most preferred method. It is also possible to deposit each of the ingredients separately onto the zeolite. One particularly useful way of depositing the components onto the zeolite is by spraying one or more of these onto the zeolite, which may be present in a drum mixer, fluidised bed etc. This may be done at room temperature or at elevated temperature, which is particularly useful if one wants to evaporate some or all of the solvent, if used, during the process. In one process the zeolite powder is mixed with the premix of the other components, e.g. in a high shear mixer, e.g. Eirich® pan granulator, Schugi® mixer, Paxeson-Kelly® twin-core blender, Loedige® ploughshare mixer, Aeromatic® fluidised bed granulator or Pharma® type drum mixer. The deposition may be done by pouring the premix into the mixer as well as by spraying, as is described above.

A particularly useful method includes the use of small amounts of water. It is preferred to keep the amount of water used small, i.e. not exceeding 50% by weight of the amount of zeolite used in the method. The water can be introduced as an additional ingredient or by providing the surfactant as a solution or dispersion.

The method of the invention uses from 1 to 30 parts by weight of organic antifoam and from 45 to 99 parts by weight of zeolite. If a lower amount of antifoam were to be used this would make the foam control agent less effective, as the antifoam would be too thinly distributed on the carrier material. Higher amounts than 30 parts of organic antifoam are possible in theory but are not practical, as this would render the dispersion of the foam control agent in the powder detergent more difficult and one could not be sure that each measure of powder detergent would incorporate the correct amount of organic antifoam. Higher levels would also possibly result in a more tacky material, which would not be granulated very easily. Preferably 2 to 20 parts of organic antifoam are used, more preferably 5 to 15 parts by weight.

It is also possible to add to the foam control agents additional ingredients which may improve the physical properties of the particles, e.g., the hardness. Such ingredients include sodium silicates and may be added at any stage during the preparation of the foam control agents although preferably they are added at the end of the process, i.e. by post-addition.

The zeolites are used in an amount of from 45 to 99 parts by weight of the foam control composition for every 1 to 30 parts of the organic antifoam. Preferably they comprise about 40 to 90% by weight of the total weight of the components mentioned as forming part of the foam control agent, i.e. the silicone antifoam, the zeolite, the binder and the organic surfactant, more preferably 50 to 80%.

The foam control agents according to the invention include a binder or encapsulant, included in the foam control agent at a level of from 1 to 30 parts by weight. It is however preferred that from 1 to 25 parts by weight are used in addition to the components present in amounts as defined above. More preferably the amount of binder or encapsulating material is used in amounts of from 5 to 20 parts, most preferably about 10 parts by weight.

There is also provided in the present invention a detergent composition in powder form which comprises 100 parts by weight of a detergent component and sufficient of a foam control agent according to the first aspect of the invention to give 0.5 to 5 parts by weight of the organic antifoam comprised in the foam control agent.

Suitable detergent components are well known in the art and have been described in numerous publications. The components comprise an active detergent, organic and/or inorganic builder salts and other additives and diluents. The active detergent may comprise organic detergent surfactants of the anionic, cationic, non-ionic or amphoteric type, or mixtures thereof. Suitable anionic organic detergent surfactants include alkali metal soaps of higher fatty acids, alkyl aryl sulphonates, for example sodium dodecyl benzene sulphonate, long chain (fatty) alcohol sulphates, olefin sulphates and sulphonates, sulphated monoglycerides, sulphated esters, sulphosuccinates, alkane sulphonates, phosphate esters, alkyl isothionates, sucrose esters and fluoro-surfactants. Suitable cationic organic detergent surfactants include alkylamine salts, quaternary ammonium salts, sulphonium salts and phosphonium salts. Suitable non-ionic detergent surfactants include condensates of ethylene oxide with a long chain (fatty) alcohol or (fatty) acid, for example C14-15 alcohol, condensed with 7 moles of ethylene oxide (Dobanol® 45-7), condensates of ethylene oxide with an amine or an amide, condensation products of ethylene and propylene oxides, fatty acid alkylol amide and fatty amine oxides. Suitable amphoteric organic detergent surfactants include imidazoline compounds, alkylaminoacid salts and betaines. Examples of inorganic components are phosphates, polyphosphates, silicates, carbonates, sulphates, oxygen releasing compounds such as sodium perborate and other bleaching agents and alumino-silicates, e.g. zeolites. Examples of organic components are anti-redeposition agents such as carboxymethyl cellulose (CMC), brighteners, chelating agents such as ethylene diamine tetra-acetic acid (EDTA) and nitrilotriacetic acid (NTA), enzymes and bacteriostats. Other optional components include colorants, dyes, perfumes, softeners, clays, some of which may be encapsulated. Materials suitable for the detergent component are well known to the person skilled in the art and are described in many text books as well as other publications.

Foam control agents made according to the method of the invention are useful in any powdered surfactant composition where foam levels need to be controlled, e.g. in laundry detergents and in dishwasher detergents.

There now follow a number of examples to illustrate the invention in which all parts and percentages are given by weight unless otherwise indicated.

### Preparation of foam control agents

### Examples 1-11

Foam control agents FCA1 to FCA12 were prepared by mixing 66.66 parts of Wessalith® P, a zeolite A manufactured by Degussa, with a mixture of 11.11 parts of an organic antifoam (A), (B) or (C) and 22.22 parts of a film-forming binder (I) to (IV). The mixture was prepared by pure mechanically mixing the antifoam and binder together and pouring the mixture very slowly into a drum mixer in which the zeolite was placed. The mixture was stirred continuously till a particulate material was obtained. The particulate material was subsequently passed over an Aeromatic® spray granulator for 20 minutes and 80°C. The organic antifoam A comprised a white mineral oil (Kaydol®), and 5% ethylene bis stearamide.

Organic antifoam B comprised ricinic oil and 5% of ethylene bis stearamide. Organic antifoam C comprised Kaydol® white mineral oil and 5% by weight of a hydrophobic silica, sold as Sipernat® D10. Film-forming binder 1 was a polycarboxylate copolymer (maleic/acrylic acid) supplied as a 40% aqueous solution under the name Sokolan® CP5; Binder II was a polyvinyl pyrrolidone prepared as a 50% aqueous dispersion; Binder III was hydroxypropyl cellulose prepared as a 50% aqueous solution, and supplied under the name Klucel®; Binder IV was alkyl polyglucoside with a degree of polymerisation of from 1.1 to 3 and a C₈₋₁₈ hydrocarbon tail, supplied as a 50% dispersion in water by Henkel, under the name Glucopon® 600CSUP. Details of the foam control agents are given below in Table I.

**TABLE I**

| FCA | Antifoam | Film Forming Binder |
|---|---|---|
| 1 | A | I |
| 2 | A | II |
| 3 | B | I |
| 4 | B | II |
| 5 | A | III |
| 6 | B | III |
| 7 | C | I |
| 8 | C | II |
| 9 | C | III |
| 10 | A | IV |
| 11 | B | IV |

### Preparation of the powder detergent composition

A powder detergent composition was prepared by mixing together 30 parts of zeolite Wessalith® CD, 20 parts of sodium carbonate, 7.5 parts of sodium sulphate, 12.5 parts of dodecyl benzene sulphonate, 10 parts of a non-ionic surfactant made by the condensation of a C₁₄₋₁₅ alcohol with 7 moles of ethylene oxide and 20 parts of sodium perborate monohydrate.

To 100g lots (Lots 1 to 11) of the detergent composition were added sufficient of the foam control agent of Examples 1 to 11 to give lg of antifoam A, B or C.

### Testing of the release in the washing cycle

A conventional automatic front-loading washing machine, having a transparent loading door, was loaded with 3.5kg of clean cotton fabric. A wash cycle with a main wash (90°C) was carried out with each of the Lots prepared above. The door of the washing machine was indicated with height measures at 25, 50, 75 and 100% of its height respectively indicated below as 1, 2, 3 or 4, 0 indicating there is no foam present. The foam height during the wash cycle was recorded when the rotation drum of the washing machine was stationary. Internal sensors indicated if the whole machine was full (F) or if the foam level was thus that the liquor overflowed from the top of the machine (T). Higher values indicate a higher foam level in the machine and thus worse performance of the foam control agent. Additional Lots 1-11 were also stored at 40°C for 4 weeks prior to testing (indicated as S-Lot1-11). Test results are given in Table II.

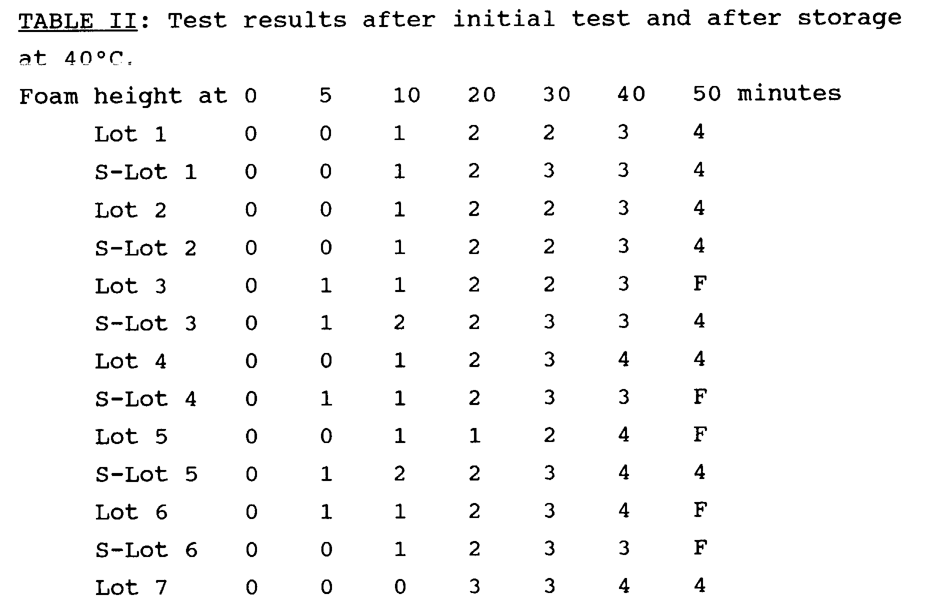

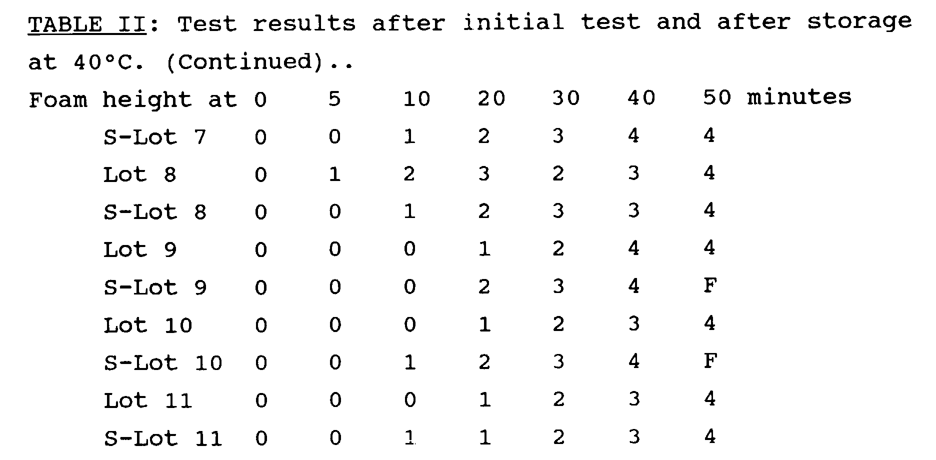

It is clear that storage stability of the foam control agent is good in all cases, and that the foam control agent releases well also in the early parts of the wash cycle.

## Claims

1. A particulate foam control agent which comprises (A) an organic antifoam (B) a zeolite carrier and (C) a film-forming binder, characterised in that from 1 to 30 parts by weight of organic antifoam (A), from 45 to 99 parts by weight of zeolite carrier (B) for the antifoam and from 1 to 30 parts by weight of film-forming binder (C) can be used and in that there is no silicone-based antifoam present in the particulate foam control agent.

2. A foam control agent according to Claim 1, further characterised in that the organic antifoam (A) is based on hydrocarbon materials or fatty esters or dispersions thereof with hydrophobic filler materials.

3. A foam control agent according to claims 1 or 2 further characterised in that the organic antifoam (A) is a liquid oil with a viscosity at 25°C of no more than 20,000 mm²/s.

4. A foam control agent according to any one of the preceding claims, further characterised in that the organic antifoam (A) is white mineral oil.

5. A foam control agent according to any one of the preceding claims, further characterised in that the organic antifoam (A) comprises a filler material in an amount of up to 25% by weight of the total weight of the antifoam which is selected from silica and alkyl amides.

6. A foam control agent according to any one of the preceding claims, further characterised in that the zeolite carrier (B) is Zeolite A having the average formula (Na₂O)ₘ.Al₂O₃.(SiO₂)ₙ.(H₂O)ₜ, wherein m has a value of from 0.9 to 1.3, n a value of from 1.3 to 4.0 and t a value of from 1 to 6.

7. A foam control agent according to any one of the preceding claims, further characterised in that the film-forming binder (C) is a polycarboxylate-type binder, polyvinyl pirrolidone, a cellulosic material or an alkyl polyglucoside or derivative thereof.

8. A foam control agent according to any one of the preceding claims, further characterised in that the film forming binder (C) is a polycarboxylate material having at least 60% by weight of segments with the general formula 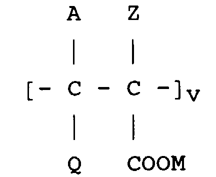 wherein A, Q and Z are each selected from the group consisting of hydrogen, methyl, carboxyl, carboxymethyl, hydroxyl and hydroxymethyl, M is hydrogen, alkali metal, ammonium or substituted ammonium and v is from 30 to 400.

9. A foam control agent according to any one of the preceding claims, further characterised in that 5 to 15 parts of organic antifoam (A) are used, 50 to 80 parts of zeolite carrier (B) and 5 to 20 parts of film-forming binder (C).

10. A detergent composition in powder form which comprises 100 parts by weight of a detergent component characterised in that it also comprises sufficient of a foam control agent according to any one of the preceding claims to give 0.5 to 5 parts by weight of the organic antifoam comprised in the foam control agent.
